(19) Europäisches Patentamt
European Patent Office
Office européen des brevets

(11) EP 4 117 891 B1

(12) **EUROPEAN PATENT SPECIFICATION**

(45) Date of publication and mention of the grant of the patent:
**31.01.2024 Bulletin 2024/05**

(21) Application number: **21709055.4**

(22) Date of filing: **08.03.2021**

(51) International Patent Classification (IPC):
***C08G 75/0209*** *(2016.01)*

(52) Cooperative Patent Classification (CPC):
**C08L 81/02; C08G 75/0209;** Y02P 10/25

(86) International application number:
**PCT/EP2021/055747**

(87) International publication number:
**WO 2021/180630 (16.09.2021 Gazette 2021/37)**

# (54) POWDERED MATERIAL CONTAINING POLY(ARYLENE SULFIDE) AND ITS USE FOR ADDITIVE MANUFACTURING

PULVERFÖRMIGES MATERIAL ENTHALTEND POLY(ARYLENSULFID) UND DESSEN VERWENDUNG IM 3D-DRUCK

MATÉRIAU EN POUDRE CONTENANT UN POLYMÈRE DE POLY(SULFURE D'ARYLÈNE) ET SON UTILISATION POUR LA FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2020 US 202062987423 P**
**14.07.2020 EP 20185792**

(43) Date of publication of application:
**18.01.2023 Bulletin 2023/03**

(73) Proprietor: **Solvay Specialty Polymers USA, LLC.
Alpharetta, GA 30005-3914 (US)**

(72) Inventors:
- **NIELSEN, Matthew
Alpharetta, GA 30009 (US)**
- **WARD, Christopher
Sandy Springs, GA 30350 (US)**
- **JEOL, Stéphane
69230 Saint-Genis-Laval (FR)**
- **VYLKOV, Nina
Alpharetta, GA 30004 (US)**

(74) Representative: **Senninger, Thierry
Solvay SA
Intellectual Assets Management
Rue de Ransbeek 310
1120 Brussels (BE)**

(56) References cited:
**EP-A1- 3 388 471**
**EP-A1- 3 530 701**
**WO-A1-2020/011990**
**WO-A1-2020/011991**
**JP-A- S6 310 633**
**JP-A- 2019 165 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 117 891 B1

## Description

### Technical Field

The present invention relates to a powdered material (M) containing at least one poly(arylene sulfide) (PAS) polymer and a process for manufacturing a three-dimensional (3D) article, part or composite material, from such powdered material (M). The present invention also relates to the 3D article, part or composite material obtainable from such process, as well as the use of the article, part or composite materials in oil and gas applications, automotive applications, electric and electronic applications, or aerospace and consumer goods.

### Background Art

Many objects, from household items to motor parts, are produced either from a single mass of material or they are milled or carved from a larger block of material. An alternative approach to manufacture objects is to deposit a thin layer of material, as a powder, and then add another layer on top, followed by another and another, and so on. This process of adding gave rise to the name additive manufacturing (AM), more commonly known as 3D printing. The range of specially designed 3D-printed products on the market is now considerable - from motor parts to dental implants. They can be notably manufactured using plastics. It is expected that additive manufacturing will disrupt established practices and overturn conventional assumptions about mass production in distant factories. Local fabrication in small volumes, or even of single items, close to the end user will become viable

One of the fundamental limitations associated with known additive manufacturing methods using polymeric part material in the form of a powder is based on the lack of identification of a material which presents the right set of properties in order to print 3D parts/objects with acceptable density and mechanical properties.

Poly(arylene sulfide) (PAS) polymers are semi-crystalline thermoplastic polymers having notable mechanical properties, such as high tensile modulus and high tensile strength, and remarkable stability towards thermal degradation and chemical reactivity. They are also characterized by excellent melt processing, such as injection molding.

This broad range of properties makes PAS polymers suitable for a large number of applications, for example in the automotive, electrical, electronic, aerospace and appliances markets.

Despite the above advantages, PAS polymers are known to present a low impact resistance and a low elongation at break, in other words a poor ductility and a poor toughness.

There is therefore a need for a PAS polymer for use in additive manufacturing which has improved ductility and toughness, while maintaining high tensile strength.

WO 2017/1226484 (Toray) describes the use of PAS resins as a powder for producing a three-dimensional model by a 3D printer with powder sintering.

WO 2020/011991 (D3) (Solvay) relates to a PAS polymer which can be used in additive manufacturing. This PAS is such that it exhibits, as a main technical feature, a calcium content of less than 200 ppm, as measured by X-ray Fluorescence (XRF) analysis calibrated with standards via ICP-OES.

WO 2020/011990 (Solvay) (D4) describes a PAS polymer which presents a flowability which makes the powder well-suited for applications such as the manufacture of 3D objects using a laser-sintering based additive manufacturing system in which the powder has to present good flow behaviors in order to facilitate the packing of the powder during the printing process.

JP 2019165004 (Toray) (D1) relates to an insulation tube having excellent durability, electric characteristics, and flame retardancy. In its reference example 1, D1 describes the preparation of a PPS based on 90 mol of p-diclorobenzene and 10 mol of m-diclorobenzene. However this document does not describe the resin in a powder form of a certain PSD, which is well-suited for 3D printing.

JP S63 10633 (Idemitsu) (D2) relates to a method for producing polyarylene sulphide used as an engineering plastic.

EP 3388471 (D5) and EP 3530701 (Toray) (D6) relates to a polyarylene sulfide resin powder granular mixture suitable for producing a three-dimensional molded article by using a selective laser sintering (SLS) 3D printer and a method for producing the three-dimensional molded article using such polyarylene sulfide resin powder granular mixture.

These documents do not describe a powdered material for use in additive manufacturing comprising a PAS polymer as described herein. The use of such material is shown to lead to better printing characteristics and improved final part properties (mechanical and part aesthetics) than the powder of the prior art.

### Summary of invention

In a first aspect, the present invention relates to a powdered material (M) as defined in claim 1 containing a poly(arylene sulfide) (PAS) polymer, said PAS polymer, comprising recurring units p, q and r according of formula (I),

(II) and (III):

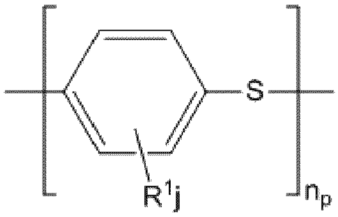
(I)
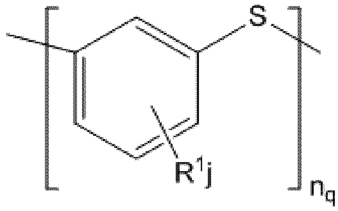
(II)
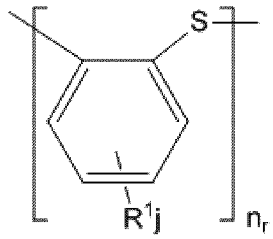
(III)

wherein

$n_p$, $n_q$ and $n_r$ are respectively the mole % of each recurring units p, q and r;
recurring units p, q and r are arranged in blocks, in alternation or randomly;
$1\% \leq (n_q + n_r) / (n_p + n_q + n_r) \leq 12\%$; nq is $\geq 0\%$ and $n_r$ is $\geq 0\%$;
j is zero or an integer varying between 1 and 4;
$R^1$ is selected from the group consisting of halogen atoms, $C_1$-$C_{12}$ alkyl groups, $C_7$-$C_{24}$ alkylaryl groups, $C_7$-$C_{24}$ aralkyl groups, $C_6$-$C_{24}$ arylene groups, $C_1$-$C_{12}$ alkoxy groups, and $C_6$-$C_{18}$ aryloxy groups,

In another aspect, the present invention relates to a process for manufacturing a three-dimensional (3D) article, part or composite material, comprising:

a) depositing successive layers of a powdered material (M) as described herein, and
b) printing layers prior to deposition of the subsequent layer.

According to this aspect, step b) preferably comprises selective sintering by means of an electromagnetic radiation of the powder.

According to a third aspect, the present invention relates to a three-dimensional (3D) article, part or composite material obtainable by additive manufacturing from a powdered material (M) described herein, said additive manufacturing preferably being selective laser sintering (SLS), composite-based additive manufacturing technology ("CBAM") or multi jet fusion (MJF).

According to a fourth aspect, the present invention relates to the use of the powdered material (M) described herein, for the manufacture of a three-dimensional (3D) object using additive manufacturing, preferably selective laser sintering (SLS), composite-based additive manufacturing technology ("CBAM") or multi jet fusion (MJF).

According to a fifth aspect, the present invention relates to the use of the article, part or composite material in oil and gas applications, automotive applications, electric and electronic applications, or aerospace and consumer goods.

**Disclosure of the invention**

Disclosed herein are powdered materials (M), as well as a process for manufacturing a 3D object (i.e. article, part or composite material) from such powdered materials (M) comprising at least one poly(arylene sulfide) polymer, also referred to herein as "poly(arylene sulfide)" or PAS. Reference to poly(arylene sulfide) polymer specifically includes, without limitation, polyphenylene sulfide polymer also referred to herein as "polyphenylene sulphide" or PPS.

The powdered material (M) of the present invention can have a regular shape such as a spherical shape, or a complex shape obtained by grinding/milling of the polymeric component (P), i.e. at least the PAS polymer, in the form of pellets or coarse powder.

In the present application:

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as

well as the endpoints of the range and equivalents.

Powdered material (M)

The powdered material (M) of the present invention comprises at least one polymeric component (P). The polymeric component (P) of the powdered material (M) may comprise one or several PAS as described below. It may also comprise at least one additional polymeric material, that-is-to-say at least one polymer or copolymer, distinct from the PAS polymer described herein. This additional polymeric material may for example be selected from the group consisting of poly(aryl ether sulfone) (PAES) polymers, for example a poly(biphenyl ether sulfone) (PPSU) polymer or a polysulfone (PSU) polymer, and a poly(aryl ether ketone) (PAEK) polymers, for example a poly(ether ether ketone) (PEEK) polymer. This additional polymeric material may also be a poly(arylene sulphide) (PAS*) distinct from the PAS described herein, for example a homopolymer of poly(phenylene sulphide) (PPS) polymer.

The PAS described herein comprises recurring units p, q and r according to respectively formula (I), (II) and (III):

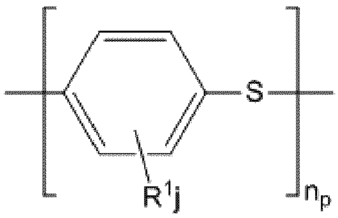
(I)
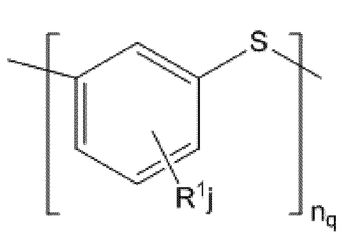
(II)
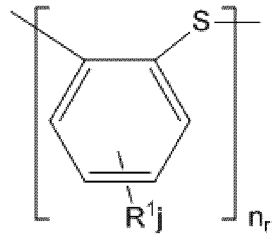
(III)

wherein the recurring units p, q and r are arranged in blocks, in alternation or randomly.

In formula (I), j is zero or an integer varying between 1 and 4.

Preferably, j is zero in formulas (I), (II) and/or (III), which means that the aromatic ring is unsubstituted. Accordingly, recurring units p, q and r are, respectively, according to formulas (IV), (V) and (VI) below:

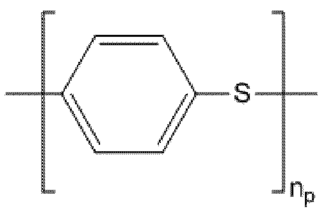
(IV)
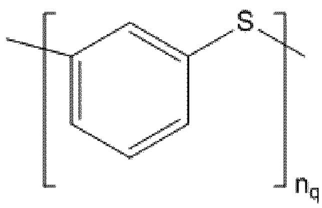
(V)
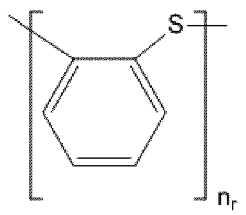
(VI)

When j varies between 1 and 4, $R^1$ can be selected from the group consisting of halogen atoms, $C_1$-$C_{12}$ alkyl groups, $C_7$-$C_{24}$ alkylaryl groups, $C_7$-$C_{24}$ aralkyl groups, $C_6$-$C_{24}$ arylene groups, $C_1$-$C_{12}$ alkoxy groups, and $C_6$-$C_{18}$ aryloxy groups.

The molar percentage of recurring units p, q and r in formula (I), respectively noted $n_p$, $n_q$ and $n_r$, is such that $1\% \leq (n_q + n_r) / (n_p + n_q + n_r) \leq 12\%$, which means that the PAS polymer of formula (I) comprises between 1 and 12 mol.% of recurring units q and r, based on the total number of recurring units p, q and r in the polymer.

The PAS polymer described herein comprises recurring units p, and it comprises recurring units q and/or r. When the PAS polymer comprises recurring units p, q and r, both $n_q$ and $n_r$ in the above equation are > 0%. Alternatively, the PAS polymer described herein may comprise recurring units p and q but no recurring units r. In this case $n_q$ is $\geq 1\%$, but $n_r = 0\%$. According to a third possibility, the PAS polymer described herein may comprise recurring units p and r but no recurring units q. In this case $n_r$ is $\geq 1\%$, but $n_q = 0\%$.

In some preferred embodiments, the PAS described herein comprises recurring units p and q according to respectively formula (I) and (II):

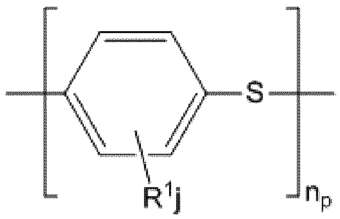
(I)
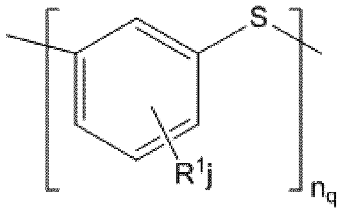
(II)

wherein the recurring units p and q are arranged in blocks, in alternation or randomly. Preferably, j is zero in formulas (I) and/or (II), which means that at least one the aromatic ring is unsubstituted. More preferably, j is zero in formulas (I) and (II), which means that both aromatic rings are unsubstituted.

In some other preferred embodiments, the PAS described herein comprises recurring units p and r according to respectively formula (I) and (III):

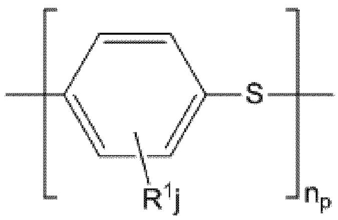
(I)
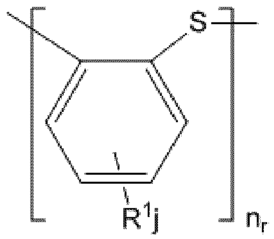
(III)

wherein the recurring units p and r are arranged in blocks, in alternation or randomly. Preferably, j is zero in formulas (I) and/or (III), which means that at least one the aromatic ring is unsubstituted. More preferably, j is zero in formulas (I) and (III), which means that both aromatic rings are unsubstituted.

In some embodiments, the molar percentage of recurring units p, q and r in the PAS is such that:

$$1.2\% \leq (n_q + n_r) / (n_p + n_q + n_{r)} \leq 10.8\%$$

or

$$1.5\% \leq (n_q + n_r) / (n_p + n_q + n_{r)} \leq 10.5\%$$

or

$$1.8\% \leq (n_q + n_r) / (n_p + n_q + n_{r)} \leq 10.2\%$$

or

$$2.0\% \leq (n_q + n_r) / (n_p + n_q + n_{r)} \leq 10.0\%$$

In some preferred embodiments wherein the PAS comprises recurring units p and q, but no recurring units r, the molar percentage of recurring units p and q in the PAS is such that:

$$1.2\% \leq n_q / (n_p + n_q) \leq 10.8\%$$

or

$$1.5\% \leq n_q / (n_p + n_q) \leq 10.5\%$$

or

$$1.8\% \leq n_q / (n_p + n_q) \leq 10.2\%$$

or

$$2.0\% \leq n_q / (n_p + n_q) \leq 10.0\%$$

As examples of realization, $n_q / (n_p + n_q)$ equals 2.5 mol.%, 3.0 mol.%, 5.0 mol.% and 7.0 mol.%.

In some preferred embodiments wherein the PAS comprises recurring units p and r, but no recurring units q, the molar percentage of recurring units p and r in the PAS is such that:

$$1.2\% \leq n_r / (n_p + n_r) \leq 10.8\%$$

or

$$1.5\% \leq n_r / (n_p + n_r) \leq 10.5\%$$

or

$$1.8\% \leq n_r / (n_p + n_r) \leq 10.2\%$$

or

$$2.0\% \leq n_r / (n_p + n_r) \leq 10.0\%$$

As examples of realization, $n_r / (n_p + n_r)$ equals 2.5 mol.%, 3.0 mol.%, 5.0 mol.% and 7.0 mol.%.

According to an embodiment, the sum $n_p + n_q + n_r$ is at least 50%, which means that the PAS comprises at least 50 mol.% of recurring units p, q and r, based on the total number of moles of recurring units in the PAS polymer. For example, the sum $n_p + n_q + n_r$ can be at least 60%, at least 70%, at least 80%, at least 90% or even at least 95%, based on the total number of moles of recurring units in the PAS polymer.

According to an embodiment described herein, the PAS consists of, or consists essentially of, recurring units p, as well as recurring units q and/or r. The expression "consists essentially of" means that the PAS comprises recurring units p, and recurring units q and/or r, as well as less than 10 mol.%, preferably less than 5 mol.%, more preferably less than 3 mol.%, even more preferably less than 1 mol.%, of other recurring units distinct from recurring units p, q and r, based on the total number of moles of recurring units in the PAS polymer.

According to an embodiment, the sum $n_p + n_q + n_r$ is 100%, with at least one of $n_q$ and $n_r > 0$ mol.%.

According to another embodiment, the sum $n_p + n_q$ is 100%.

According to yet another embodiment, the sum $n_p + n_r$ is 100%.

According to an embodiment, the sum $n_p + n_q + n_r$ is less than 100%. In this embodiment, the PAS polymer comprises at least one recurring unit distinct from p, r and q, for example recurring units according to formulas (VII) to (XVII) below:

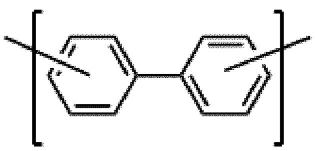
(VII),

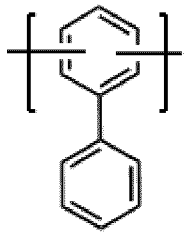
(VIII),

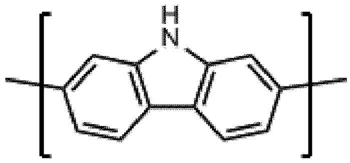
(IX),

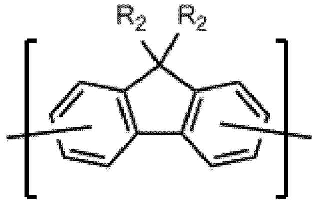
(X),

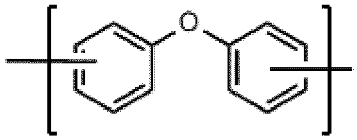
(XI),

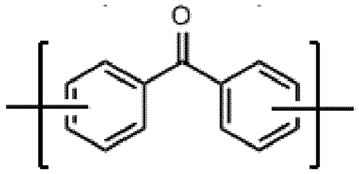
(XII)

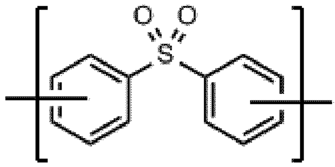
(XIII),

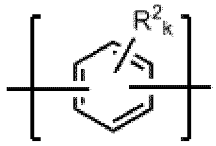
(XIV),

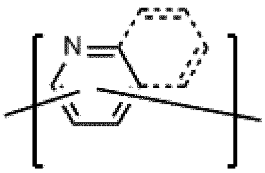
(XV),

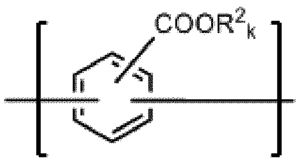
(XVI),

and

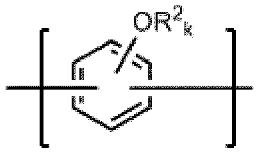
(XVII),

wherein $R^2$ can be selected from the group consisting of halogen atoms, $C_1$-$C_{12}$ alkyl groups, $C_7$-$C_{24}$ alkylaryl groups, $C_7$-$C_{24}$ aralkyl groups, $C_6$-$C_{24}$ arylene groups, $C_1$-$C_{12}$ alkoxy groups, and $C_6$-$C_{18}$ aryloxy groups, k is zero or an integer varying between 1 and 4.

Preferably, the PAS has a melt flow rate (at 315.6°C under a weight of 1.27 kg according to ASTM D1238, procedure B) of at most 700 g/10 min, more preferably of at most 500 g/10 min, even more preferably of at most 200 g/10 min.

Preferably, the PAS has a melt flow rate (at 315.6 °C under a weight of 1.27 kg according to ASTM D1238, procedure B) of at least 1 g/10 min, more preferably of at least 5 g/10 min, even more preferably of at least 10 g/10 min, still more preferably of at least 15 g/10 min, still more preferably of at least 50 g/10 min.

Preferably, the PAS has a melting point of at least 220°C, more preferably of at least 225°C, even more preferably of at least 230°C, when determined on the 2nd heat scan in differential scanning calorimeter (DSC) according to ASTM D3418, using heating and cooling rates of 20°C/min.

Preferably, the PAS has a melting point of at most 290°C, more preferably of at most 285°C, even more preferably of at most 280°C, when determined on the 2nd heat scan in differential scanning calorimeter (DSC) according to ASTM D3418, using heating and cooling rates of 20°C/min.

In some embodiments, the PAS has a heat of fusion of more than 20 J/g, determined on the 2nd heat scan in differential scanning calorimeter (DSC) according to ASTM D3418, using heating and cooling rates of 20°C/min, preferably more than 21 J/g or more than 22 J/g.

The powdered material (M) of the present invention comprises one polymeric component (P) comprising at least one PAS polymer as described above. The powdered material (M) of the present invention may consist essentially in one or several polymers, for example it may consist essentially in one PAS polymer as described herein, or it may also comprise further components, for example a flow aid/agent (F), as described below, and/or one or several additives (A). When the powdered material (M) of the invention comprises additional components, they can be added or blended with the polymeric component described herein before, during or after the step of grinding.

In some embodiments of the present invention, the powdered material (M) has a $d_{50}$-value of less than 100 μm, as measured by laser scattering in isopropanol. According to an embodiment, the powdered material (M) has a $d_{50}$-value of less than 90 μm, as measured by laser scattering in isopropanol, preferably less than 80 μm or less than 75 μm.

In some embodiments of the present invention, the powdered material (M) has a $d_{50}$-value of more than 10 μm, as measured by laser scattering in isopropanol. According to an embodiment, the powdered material (M) has a $d_{50}$-value of more than 15 μm, as measured by laser scattering in isopropanol, preferably more than 20 μm, more than 25 or more than 30 μm.

In some embodiments of the present invention, the powdered material (M) has a $d_{90}$-value of less than 150 μm, as measured by laser scattering in isopropanol. According to an embodiment, the powdered material (M) has a $d_{90}$-value of less than 120 μm, as measured by laser scattering in isopropanol, preferably less than 110 μm or less than 100 μm.

In some embodiments of the present invention, the powdered material (M) has a $d_{10}$-value higher than 0.1 μm, as measured by laser scattering in isopropanol. According to a preferred embodiment, the powdered material (M) has a $d_{10}$-value higher than 1 μm, as measured by laser scattering in isopropanol, preferably higher than 5 μm or higher than 10 μm.

In some embodiments of the present invention, the powdered material (M) has a $d_{50}$-value comprised between 40 μm and 70 μm, as measured by laser scattering in isopropanol, preferably between 40 μm and 60 μm, or between 43 μm and 58 μm or between 45 μm and 55 μm. A powdered material (M) with such particle size distribution is for example well-suited for selective laser sintering (SLS).

In some embodiments of the present invention, the powdered material (M) has a $d_{99}$-value less than 195 μm, as measured by laser scattering in isopropanol. According to a preferred embodiment, the powdered material (M) has a $d_{99}$-value less than 190 μm, as measured by laser scattering in isopropanol, preferably less than 180 μm or less than 170 μm.

The powdered material (M) of the present invention may have a BET surface area ranging from 0 to 30 $m^2/g$, preferably from 2 to 25 $m^2/g$, more preferably from 4 to 20 $m^2/g$, as measured by ISO 9277, using a soak /evacuation temperature of at most 25 °C.

The powdered material (M) of the present invention may have a bulk density (or poured bulk density) of at least 0.35 $g/cm^3$, preferably at least 0.45 $g/cm^3$, most preferably at least 0.50 $g/cm^3$.

According to one embodiment, the powdered material (M) of the present invention comprises at least 50 wt.% of the polymeric component (P), for example at least 60 wt.% of the polymeric component (P), at least 70 wt.%, at least 80 wt.%, at least 90 wt.%, at least 95 wt.%, at least 98 wt.% or at least 99 wt.% of the polymeric component (P) described herein, based on the total weight of the powdered material (M).

According to one embodiment, the polymeric component (P) comprises at least 50 wt.% of the PAS described herein, for example at least 60 wt.% of the PAS described herein, at least 70 wt.%, at least 80 wt.%, at least 90 wt.%, at least 95 wt.%, at least 98 wt.% or at least 99 wt.% of the PAS described herein described herein, based on the total weight of the powder.

Additional components may notably be added to the polymeric component (P), before, during or after the step grinding of the polymeric component (P), notably the step grinding of the PAS described herein, before the use of the powder for additive manufacturing. For example, the additional component may be a flow agent (F). This flow agent (F) may for example be hydrophilic. Examples of hydrophilic flow aids are inorganic pigments notably selected from the group consisting of silicas, aluminas and titanium oxide. Mention can be made of fumed silica. Fumed silicas are commercially available under the trade name Aerosil® (Evonik) and Cab-O-Sil® (Cabot). Fumed aluminas are commercially available under the trade name SpectraAl® (Cabot).

In one embodiment of the present invention, the powdered material (M) comprises from 0.01 to 10 wt.% of a flow agent (F), for example from 0.05 to 8 wt.%, from 0.1 to 6 wt.% or from 0.15 to 5 wt.% of at least one flow agent (F), for example of at least fumed silica or fumed alumina, based on the total weight of the powder.

These silicas or aluminas are composed of nanometric primary particles (typically between 5 and 50 nm for fumed silicas or aluminas). These primary particles are combined to form aggregates. In use as flow agent, silicas or

aluminas are found in various forms (elementary particles and aggregates).

The powdered material (M) of the present invention may also comprise one or several additives (A), for example selected from the group consisting of fillers (such as carbon fibers, glass fibers, milled carbon fibers, glass beads, glass microspheres, milled glass fibers, wollastonite, silica beads, talc, calcium carbonates), colorants, dyes, pigments, lubricants, plasticizers, flame retardants (such as halogen and halogen free flame retardants), nucleating agents, heat stabilizers, light stabilizers, antioxidants, processing aids, thermally conductive fillers (such as boron nitride), fusing agents and electromagnetic absorbers. Specific examples of these optional additives (A) are titanium dioxide, zinc oxide, cerium oxide, silica or zinc sulphide, glass fibers, carbon fibers.

The powdered material (M) of the present invention may also comprise flame retardants, such as halogen and halogen free flame retardants.

In another embodiment of the present invention, the powdered material (M) comprises from 0.01 to 30 wt.% of at least one additive (A), for example from 0.05 to 25 wt.%, from 0.1 to 20 wt.% or from 0.15 to 10 wt.% of at least one additive (A), based on the total weight of the powder.

According to one embodiment, the powdered material (M) of the present invention comprises:

- at least 50 wt.% of the polymeric component (P),
- from 0.01 wt.% to 10 wt.%, from 0.05 to 8 wt.%, from 0.1 to 6 wt.% or from 0.15 to 5 wt.% of at least one flow agent (F), and
- optionally at least one additive (A), for example selected from the group consisting of fillers (such as carbon fibers, glass fibers, milled carbon fibers, glass beads, glass microspheres, silica beads, talc, calcium carbonates, milled glass fibers, wollastonite) colorants, dyes, pigments, lubricants, plasticizers, flame retardants (such as halogen and halogen free flame retardants), nucleating agents, heat stabilizers, light stabilizers, antioxidants, processing aids, thermally conductive fillers (such as boron nitride), fusing agents and electromagnetic absorbers,

the % being based on the total weight of the powder.

The PAS polymer of the present invention can be obtained by a process known in the art. Reference can notably be made to WO 2015/095362 A1 (Chevron Philipps), WO 2015/177857 A1 (Solvay) and WO 2016/079243 A1 (Solvay), incorporated herein by reference.

The PAS polymer employed in the method of the present invention may notably be obtained by a process comprising:

Step 1) polymerizing reactants in a reaction vessel to produce a PAS reaction mixture;
Step 2) processing the PAS reaction mixture to obtain a PAS polymer and a by-product slurry;
Step 3) recovering the PAS polymer, for example by precipitation or by evaporation; and
Step 4) treating the PAS polymer with water and/or an aqueous acid solution and/or a calcium solution.

In some embodiments, when Step 4) consists in treating the PAS polymer with water and/or an aqueous acid solution (not a calcium solution), the PAS preparation process yields to a treated PAS, which presents a low content of calcium, as measured by X-ray Fluorescence (XRF) analysis calibrated with standards via ICP-OES. Step 4) can consist in treating (or washing) the PAS polymer with water, with an aqueous acid solution and a combination of both. The PAS polymer can be treated or washed several times. The PAS polymer which undergoes the treating of Step 4) can either be in a dry form or dispersed in a solvent.

According to an embodiment of Step 4), the PAS is contacted, for example blended, with water and/or an aqueous acid solution to form a mixture. The concentration of PAS in the mixture can range from about 1 wt. % to about 50 wt. %, from about 5 wt. % to about 40 wt. %, or from about 10 wt. % to about 30 wt. %, based upon the total weight of the mixture.

The aqueous acid solution which may be employed in Step 4) may comprise an acidic compound. The acidic compound can be any organic acid or inorganic acid which is water soluble. According to an embodiment, the organic acid which can be utilized is a C1 to C15 carboxylic acid, for example a C1 to C10 carboxylic acid or a C1 to C5 carboxylic acid. According to an embodiment, the organic acid which can be utilized is selected in the group consisting of acetic acid, formic acid, oxalic acid, fumaric acid, and monopotassium phthalic acid. Preferably the organic acid is acetic acid. Inorganic acids which can be utilized can be selected in the group consisting of hydrochloric acid, monoammonium phosphate, sulfuric acid, phosphoric acid, boric acid, nitric acid, sodium dihydrogen phosphate, ammonium dihydrogen phosphate, carbonic acid, and sulfurous acid. The amount of the acidic compound present in the aqueous acidic solution or in the mixture can range from 0.01 wt. % to 10 wt. %, from 0.025 wt. % to 5 wt. %, or from 0.075 wt. % to 1 wt. % based on the total amount of water in the solution/mixture.

The solution/mixture can be heated to a temperature below the melting point of the PAS. The temperature of the solution/mixture in Step 4) can range from about 10 to 190° C, from 15 to 185° C or from about 20 to 180° C.

In some embodiments, the PAS polymer is such that it exhibits a calcium content of less than 800 ppm, as measured by X-ray Fluorescence (XRF) analysis calibrated with standards via ICP-OES, preferably less than 500 ppm, less than 200 ppm, less than 100ppm, less than 50ppm or less than 10 ppm.

In some embodiments, the PAS polymer is such that it exhibits a calcium content of more than 1 ppm, as measured by X-ray Fluorescence (XRF) analysis calibrated with standards via ICP-OES, preferably more than 2 ppm or more than 5 ppm.

In some embodiments, the PAS polymer is such that it exhibits a sodium content of less than 2000 ppm, as measured by X-ray Fluorescence (XRF) analysis calibrated with standards via ICP-OES, preferably less than 1500 ppm, less than 1000 ppm, less than 800ppm, less than 500ppm or less than 100 ppm.

In some embodiments, the PAS polymer is such that it exhibits a sodium content of more than 1 ppm, as measured by X-ray Fluorescence (XRF) analysis calibrated with standards via ICP-OES, preferably more than 2 ppm or more than 5 ppm.

The calcium and sodium contents can be measured by X-ray fluorescence (XRF) analysis calibrated with standards of known calcium content as determined by Inductively Coupled Plasma Optical Emission Spectrometry (ICP-OES) according to ASTM UOP714 - 07.

The present invention is also directed to a process for producing the powdered material (M) for the use in a method for a layer-wise manufacturing of a three-dimensional part, in which the fine powder is manufactured by grinding, a precipitation process from a solvent, melt spraying or spray drying from a coarse powder or granulate.

The powdered material (M) employed in the additive manufacturing process of the present invention may be obtained by:

Step 1') grinding the polymeric component (P), notably grinding the PAS polymer described herein; and
Step 2') blending the polymeric component (P) from Step 1') with the optional components, e.g. at least one flow agent (F).

The powdered material (M) employed in the additive manufacturing process of the present invention may alternatively be obtained by:

Step 1") blending the polymeric component (P) with the optional components, e.g. at least one flow agent (F), and
Step 2") grinding the blend from Step 1"), notably grinding the PAS polymer described herein.

The grinding step can take place in a pinned disk mill, a jet mill / fluidized jet mil with classifier, an impact mill plus classifier, a pin/pin-beater mill or a wet grinding mill, or a combination of those equipment.

The ground powdered material can be separated or sieved, preferably in an air separator or classifier, to obtain a predetermined fraction spectrum. The powdered material (M) is preferably sieved before use in the printer. The sieving consists in removing particles bigger than 200 μm, than 150 μm, than 140 μm, 130 μm, 120 μm, 110 μm, or bigger than 100 μm, using the appropriate equipment.

According to another aspect, the present invention relates to a process for manufacturing a three-dimensional (3D) article, part or composite material, comprising depositing successive layers of a powdered material (M) and selectively sintering each layer prior to deposition of the subsequent layer, for example by means of an electromagnetic radiation of the powder.

The additive manufacturing process of the present invention is preferably selected from the group consisting of selective laser sintering (SLS), composite-based additive manufacturing technology ("CBAM") or multi jet fusion (MJF).

The additive manufacturing process usually takes place using a 3D printer.

SLS 3D printers are, for example, available from EOS Corporation under the trade name EOSINT® P.

MJF 3D printers are, for example, available from Hewlett-Packard Company under the trade name Multi Jet Fusion.

The powder may also be used to produce continuous fiber composites in a CBAM process, for example as developed by Impossible Objects.

According to an embodiment, the step of printing layers comprises the selective sintering of the powdered material (M) by means of an electromagnetic radiation of the powdered material (M), for example a high power laser source such as an electromagnetic beam source.

The 3D object/article/part may be built on substrate, for example an horizontal substrate and/or on a planar substrate. The substrate may be moveable in all directions, for example in the horizontal or vertical direction. During the 3D printing process, the substrate can, for example, be lowered, in order for the successive layer of unsintered polymeric material to be sintered on top of the former layer of sintered polymeric material.

According to an embodiment, the process further comprises a step consisting in producing a support structure. According to this embodiment, the 3D object is built upon the support structure and both the support structure and the

3D object are produced using the same AM method. The support structure may be useful in multiple situations. For example, the support structure may be useful in providing sufficient support to the printed or under-printing, in order to avoid distortion of the shaped 3D object, especially when this 3D object is not planar. This is particularly true when the temperature used to maintain the printed or under-printing, 3D object is below the re-solidification temperature of the polymeric component, e.g. PAS polymer.

The 3D printer may comprise a sintering chamber and a powder bed, both maintained at determined at a specific temperature.

The powdered material (M) to be printed can be pre-heated to a processing temperature (Tp), above the glass transition (Tg) temperature of the powder, and below the melting temperature (Tm). The preheating of the powdered material (M) makes it easier for the laser to raise the temperature of the selected regions of layer of unfused powder to the melting point. The laser causes fusion of the material only in locations specified by the input. Laser energy exposure is typically selected based on the polymer in use and to avoid polymer degradation.

Article and applications

The present invention also relates to an article, part or composite material comprising the poly(arylene sulfide) (PAS) as described herein obtainable from the additive manufacturing process of the present invention, and to the use of said article, part or composite material in oil and gas applications, automotive applications, electric and electronic applications, or aerospace and consumer goods.

With respect to automotive applications, said articles can be pans (e.g. oil pans), panels (e.g. exterior body panels, including but not limited to quarter panels, trunk, hood; and interior body panels, including but not limited to, door panels and dash panels), side-panels, mirrors, bumpers, bars (e.g., torsion bars and sway bars), rods, suspensions components (e.g., suspension rods, leaf springs, suspension arms), and turbo charger components (e.g. housings, volutes, compressor wheels and impellers), pipes (to convey for example fuel, coolant, air, brake fluid) and brackets. With respect to oil and gas applications, said articles can be drilling components, such as downhole drilling tubes, chemical injection tubes, undersea umbilicals and hydraulic control lines. Said articles can also be mobile electronic device components.

According to an embodiment, the composite material obtainable from the additive manufacturing process of the present invention is a continuous fibers reinforced thermoplastics composite. The fibers may be composed of carbon, glass or organic fibers such as aramid fibers.

The present invention also relates to the use of the powdered material (M) described herein, for the manufacture of a three-dimensional (3D) object using additive manufacturing, preferably selective laser sintering (SLS), composite-based additive manufacturing technology ("CBAM") or multi jet fusion (MJF).

The invention will now be described with reference to the following examples, whose purpose is merely illustrative and not intended to limit the scope of the invention.

**Experimental section**

**Materials**

**NaSH** (~55-60 wt. %) commercially available from Nouryan
**1,3-dichlorobenzene** was obtained from Tulstar
**NaOH** commercially available from Columbus Chemical Industries Inc
**Sodium Acetate** commercially available from Jarchem
**NMP** commercially available from Ashland

**Synthesis example**

PAS polymer #1 (inventive)

This polymer was synthesized in a 340 liters reactor with 41.26 kg of NaSH (57.0 wt %), 30.84 kg of NaOH (50.6 wt %), 12.07 kg of NaOAc, and 123.05 kgs of NMP. Following a dehydration step, 55.65 kg of 1,4-dichlorobenzene and 2.93 kg of 1,3-dichlorobenzene and the mixture was heated to a maximum temperature of 275° C. After addition of 7.71 kg of additional NMP, the mixture was cooled gradually to obtain granular PPS which was rinsed with NMP, water, and an acetic acid solution at 60° C - 75° C. The obtained product is a poly(phenylene sulfide) wherein $n_p$ = 95%, $n_q$ = 5% and $n_r$ = 0%.

PAS polymer #2 (comparative)

This polymer was synthesized and recovered from the reaction mixture according to methods described in U.S. Patent Nos. 3,919,177 and 4,415,729, washed with deionized water for at least 5 minutes at 60°C, then contacted with an aqueous acetic acid solution having a pH of <6.0 for at least 5 minutes at 60°C, and subsequently rinsed with deionized water at 60°C.

The obtained product is a poly(phenylene sulfide) wherein $n_p$ = 100%, $n_q$ = 0% and $n_r$ = 0%.

PAS polymer #3 (comparative)

This polymer was synthesized and recovered from the reaction mixture according to methods described in U.S. Patent Nos. 3,919,177 and 4,415,729, washed with deionized water for at least 5 minutes at 60°C, then contacted with about 0.01 mol/L aqueous calcium acetate solution for at least 5 minutes at 60°C, and subsequently rinsed with deionized water at 60°C.

The obtained product is a poly(phenylene sulfide) wherein $n_p$ = 100%, $n_q$ = 0% and $n_r$ = 0%.

**Characterization of the polymeric component**

DSC/Heat of fusion

DSC analyses were carried out on DSC Q200-5293 TA Instrument according to ASTM D3418 and data was collected through a two heat, one cool method. The protocol used is the following: 1st heat cycle from 30.00°C to 350.00°C at 20.00°C/min; isothermal for 5 minutes; 1st cool cycle from 350.00°C to 30.00°C at 20.00°C/min; 2nd heat cycle from 30.00°C to 350.00°C at 20.00°C/min. The melting temperature ($T_m$) is recorded during the 1st and 2nd heat cycles, the melt crystallization temperature ($T_{mc}$) is recorded during the cool cycle, , the glass transition temperature ($T_g$) is recorded during the 2nd heat cycle, and the enthalpy of melting ($\Delta H$) is recorded during the 2nd heat cycle.

Molecular Weight (Mw)

The weight-averaged molecular weight Mw was determined by gel permeation chromatography (GPC) at 210 °C using a PL 220 high temperature GPC with a 1-chloronaphtalene mobile phase and polystyrene standards.

Melt Flow Rate

The MFR is measured on a extrusion plastometer at 315.6 °C using a weight of 5 kg and a 0.0825 inch × 0.315 inch die after a 5 minute equilibration period (with units of g/10 min).

**Grinding of the polymeric components** - **Preparation of the powdered materials**

The PAS polymer were turned into powders by milling on a rotor attrition mill (Retsch Rotor Mill SR300) until they reach a PSD as follows:

- $d_{10}$ > 20 microns,
- 30 < $d_{50}$ < 70 microns and
- $d_{90}$ < 110 microns.

Particle size was determined on the polymers by an average of 3 runs via a laser scattering technique on a Microtrac S3500 analyzer in wet mode (128 channels, between 0.0215 and 1408 μm). The solvent used was isopropanol with a refractive index of 1.38, with the particles assumed to have a refractive index of 1.59. The ultrasonic mode was enabled (25 W/60 seconds) and the flow was set at 55%.

The powders were then blended with 0.3% fumed silica (Cab-O-Sil® M-5 from Cabot Corporation) via drum rolling and sieved through No. 120 mesh tensile bolting cloth (pore size of 147 μm).

BET surface area (multi-point) of the final powders was determined on a TriStar II Plus Version 3.01 surface area and pore analyzer via nitrogen (N2) gas adsorption according to ISO 9277.

Bulk density of the powders was determined via Method A of ASTM D1895.

Characterization of the powdered materials

Table 1

| | $d_{50}$ (μm) | BET Surface Area ($m^2/g$) | Bulk Density ($g/cm^3$) |
|---|---|---|---|
| PAS polymer #1 | 43 | 14.71 | 0.54 |
| PAS polymer #2 | 50 | 1.83 | 0.64 |
| PAS polymer #3 | 54 | 3.76 | 0.60 |

**Printing**

Printing occurred on an EOSINT® P800 SLS Printer, using the following print settings: hatch laser power of 12 watts, contour laser power of 8.5 watts, laser speed of 2.65 m/s, and cooling rate after print completion of less than 10°C /min.

The powdered materials were sintered into ASTM Type I tensile bars.

Characterization of the printed bars

The ASTM Type I tensile bars were tested according to ASTM D638, where the result reported in Table 3 is an average from 5 bars.

**Results**

Table 2

| | Composition | Mw (g/mol) | MFR (g/ 10 min) | $T_g$ (°C) | $T_{mc}$ (°C) | $T_m$ 2nd heat (°C) | Tm 1st heat (°C) | ΔH ($J \cdot g^{-1}$) |
|---|---|---|---|---|---|---|---|---|
| PAS polymer #1 | $n_p$ = 95%<br>$n_q$ = 5%<br>$n_r$ = 0% | 61,000 | 113 | 91 | 190 | 263 | 276 | 47.4 |
| PAS polymer #2 | $n_p$ = 100%<br>$n_q$ = 0%<br>$n_r$ = 0% | 55,000 | 100 | 95 | 227 | 280 | 289 | 50.9 |
| PAS polymer #3 | $n_p$ = 100%<br>$n_q$ = 0%<br>$n_r$ = 0% | 53,000 | 89 | 97 | 196 | 278 | 291 | 48.8 |

Table 3

| Example | Processing Temperature (°C) | Ultimate Tensile Strength (MPa) |
|---|---|---|
| PAS polymer #1 (inv) | 250 | 61 |
| PAS polymer #2 (comp) | 275 | 50 |
| PAS polymer #3 (comp) | 270 | 43 |

The powders containing PAS polymer #2 or PAS polymer #3 (comparative powders) were first printed at a processing temperature of 250° C, but this lead to curling. The processing temperatures were thus adjusted to 275° C

for the comparative powder #2 and 270° C for the comparative powder #3, in order to avoid curling. The powder based on the inventive PAS polymer #1 was printed at a processing temperature of 250° C and no curling occurred.

The inventive powder demonstrated better printing characteristics and final resulting printed part properties (mechanical and part aesthetics) than the comparative powder. During the print, the inventive powder demonstrated a smooth bed surface during the entire print. This is critical towards obtaining a stable print that will result in a successful print completion and acceptable parts.

The bars printed from the inventive powder exhibited smooth surfaces.

The use of the inventive powder comprising 5% of recurring units q, resulted in parts with mechanical properties (ultimate tensile strength) superior to that of the comparative powders, made exclusively of recurring units p.

## Claims

1. A powdered material (M) for additive manufacturing, having a $d_{50}$-value ranging between 10 and 100 μm, as measured by laser scattering in isopropanol, comprising:

   - one polymeric component (P) comprising at least one poly(arylene sulfide) (PAS) polymer, comprising recurring units p, q and r according of formula (I), (II) and (III):

   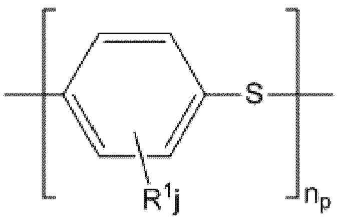 (I) 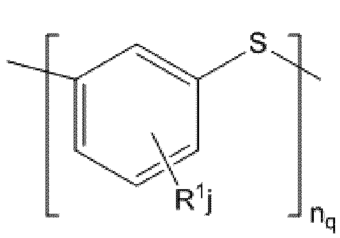 (II) 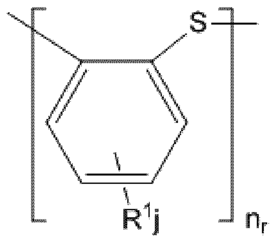 (III)

   wherein

   - $n_p$, $n_q$ and $n_r$ are respectively the mole % of each recurring units p, q and r;
   - recurring units p, q and r are arranged in blocks, in alternation or random ly;
   - $$1\% \leq (n_q + n_r) / (n_p + n_q + n_r) \leq 12\%;$$
   - $n_q$ is ≥ 0% and $n_r$ is ≥ 0%;
   - j is zero or an integer varying between 1 and 4;
   - $R^1$ is selected from the group consisting of halogen atoms, $C_1$-$C_{12}$ alkyl groups, $C_7$-$C_{24}$ alkylaryl groups, $C_7$-$C_{24}$ aralkyl groups, $C_6$-$C_{24}$ arylene groups, $C_1$-$C_{12}$ alkoxy groups, and $C_6$-$C_{18}$ aryloxy groups,

   - optionally one or several flow agent(s) (F),
   - optionally one or several additive(s) (A) selected from the group consisting of lubricants, heat stabilizers, light stabilizers, antioxidants, pigments, processing aids, dyes, fillers, nanofillers or electromagnetic absorbers and flame retardants.

2. The powdered material (M) of claim 1, wherein the PAS is such that $n_p + n_q + n_r \geq 50\%$.

3. The powdered material (M) of claim 1 or 2, wherein the PAS is such that it consists or consists essentially in recurring units p and recurring units q and/or r.

4. The powdered material (M) of any one of claims 1 to 3, wherein the PAS is such that j is zero in formula (I), (II) and (III)

5. The powdered material (M) of any one of claims 1 to 3, wherein the PAS comprises:

   - recurring units p and q but no recurring units r and the molar percentage of recurring units p and q in the

PAS is such that 1.2% $\leq n_q / (n_p + n_q) \leq$ 10.8%; or

- recurring units p and r but no recurring units q and the molar percentage of recurring units p and r in the PAS is such that 1.2% $\leq n_r / (n_p + n_q) \leq$ 10.8%.

**6.** The powdered material (M) of any one of claims 1 to 5, wherein the PAS has a heat of fusion of more than 20 J/g, determined on the 2$^{nd}$ heat scan in differential scanning calorimeter (DSC) according to ASTM D3418, using heating and cooling rates of 20 °C/min.

**7.** The powdered material (M) of any one of claims 1 to 6, wherein the PAS is such that it has a melting point of at most 280° C, preferably of at most 278°C, more preferably of at most 275°C, and / or of at least 245°C, preferably of at least 248°C, more preferably of at least 250°C, when determined on the 2$^{nd}$ heat scan in differential scanning calorimeter (DSC) according to ASTM D3418, using heating and cooling rates of 20 °C/min.

**8.** The powdered material (M) of any one of claims 1 to 7, wherein the flow agent (F) is an inorganic pigment selected from the group consisting of silicas, aluminas and titanium oxide.

**9.** The powdered material (M) of any one of claims 1 to 8, wherein the flow agent (F) is fumed silica.

**10.** The powdered material (M) of any one of claims 1 to 9, wherein the material (M) has a $d_{50}$-value ranging between 15 and 80 $\mu$m, as measured by laser scattering in isopropanol.

**11.** The powdered material (M) of any one of claims 1 to 10, wherein the material (M) has a $d_{90}$-value of less than 150 $\mu$m, as measured by laser scattering in isopropanol.

**12.** The powdered material (M) of any one of claims 1 to 11, wherein the material (M) has a $d_{10}$-value higher than 0.1 $\mu$m, as measured by laser scattering in isopropanol.

**13.** The powdered material (M) of any one of claims 1 to 12, wherein the material (M) has a $d_{99}$-value less than 195 $\mu$m, as measured by laser scattering in isopropanol.

**14.** The powdered material (M) of any one of claims 1 to 13, wherein the powdered material (M) has a BET surface area ranging from 4 to 20 $m^2$/g, as measured by ISO 9277, using a soak /evacuation temperature of at most 25 °C.

**15.** A process for manufacturing a three-dimensional (3D) article, part or composite material, comprising:

a) depositing successive layers of a powdered material (M) of any one of claims 1-14, and
b) printing layers prior to deposition of the subsequent layer.

**16.** The process of claim 15, wherein step b) comprises selective sintering by means of an electromagnetic radiation of the powder.

**17.** A three-dimensional (3D) article, part or composite material obtainable by additive manufacturing from a powdered material (M) of any one of claims 1-14, said additive manufacturing preferably being selective laser sintering (SLS), composite-based additive manufacturing technology ("CBAM") or multi jet fusion (MJF).

**18.** Use of the powdered material (M) of any one of claims 1-14, for the manufacture of a three-dimensional (3D) object using additive manufacturing, preferably selective laser sintering (SLS), composite-based additive manufacturing technology ("CBAM") or multi jet fusion (MJF).

**19.** Use of the article, part or composite material of claim 17 in oil and gas applications, automotive applications, electric and electronic applications, or aerospace and consumer goods.

## Patentansprüche

**1.** Pulverförmiges Material (M) für die additive Fertigung mit einem $d_{50}$-Wert in dem Bereich zwischen 10 und 100 $\mu$m, wie gemessen durch Laserstreuung in Isopropanol, umfassend:

- eine Polymerkomponente (P) umfassend wenigstens ein Poly(arylensulfid)(PAS)-Polymer umfassend Wiederholungseinheiten p, q und r gemäß Formel (I), (II) und (III).

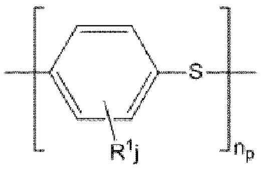 (I) 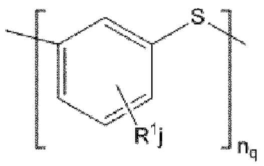 (II) 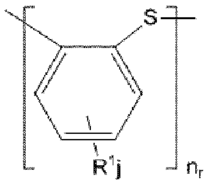 (III)

wobei

- $n_p$, $n_q$ und $n_r$ jeweils die mol-% der jeweiligen Wiederholungseinheiten p, q und r sind;
- Wiederholungseinheiten p, q und r in Blöcken, abwechselnd oder zufällig angeordnet sind;
- $$1\ \% \leq (n_q + n_r) / (n_p + n_q + n_r) \leq 12\ \%;$$
- $n_q \geq 0$ % ist und $n_r \geq 0$ % ist;
- j null oder eine ganze Zahl in dem Bereich zwischen 1 und 4 ist;
- $R^1$ ausgewählt ist aus der Gruppe bestehend aus Halogenatomen, $C_1$-$C_{12}$-Alkylgruppen, $C_7$-$C_{24}$-Alkylarylgruppen, $C_7$-$C_{24}$-Aralkylgruppen, $C_6$-$C_{24}$-Arylengruppen, $C_1$-$C_{12}$-Alkoxygruppen und $C_6$-$C_{18}$-Aryloxygruppen,

- gegebenenfalls ein oder mehrere Fließmittel (F),
- gegebenenfalls einen oder mehrere Zusatzstoff (e) (A) ausgewählt aus der Gruppe bestehend aus Schmiermitteln, Wärmestabilisatoren, Lichtstabilisatoren, Antioxidationsmitteln, Pigmenten, Verarbeitungshilfsmitteln, Farbstoffen, Füllstoffen, Nanofüllstoffen oder elektromagnetischen Absorbern und Flammhemmern.

**2.** Pulverförmiges Material (M) gemäß Anspruch 1, wobei das PAS so ist, dass $n_p + n_q + n_r \geq 50$ %.

**3.** Pulverförmiges Material (M) gemäß Anspruch 1 oder 2, wobei das PAS so ist, dass es aus Wiederholungseinheiten p und Wiederholungseinheiten q und/oder r besteht oder im Wesentlichen daraus besteht.

**4.** Pulverförmiges Material (M) gemäß einem der Ansprüche 1 bis 3, wobei das PAS so ist, dass j in den Formeln (I), (II) und (III) null ist.

**5.** Pulverförmiges Material (M) gemäß einem der Ansprüche 1 bis 3, wobei das PAS umfasst:

- Wiederholungseinheiten p und q, aber keine Wiederholungseinheiten r, und das Molverhältnis von Wiederholungseinheiten p und q in dem PAS so ist, dass 1,2 % $\leq n_q / (n_p + n_q) \leq$ 10,8 %; oder
- Wiederholungseinheiten p und r, aber keine Wiederholungseinheiten q, und das Molverhältnis von Wiederholungseinheiten p und r in dem PAS so ist, dass 1,2 % $\leq n_r / (n_p + n_q) \leq$ 10,8 %.

**6.** Pulverförmiges Material (M) gemäß einem der Ansprüche 1 bis 5, wobei das PAS eine Schmelzwärme von höher als 20 J/g aufweist, bestimmt bei dem 2. Heizlauf in einem Differentialscanning-Kalorimeter (DSC) gemäß ASTM D3418 unter Verwendung von Heiz- und Kühlraten von 20 °C/min.

**7.** Pulverförmiges Material (M) gemäß einem der Ansprüche 1 bis 6, wobei das PAS so ist, dass es einen Schmelzpunkt von höchstens 280 °C, vorzugsweise höchstens 278 °C, bevorzugter höchstens 275 °C und/oder wenigstens 245 °C, vorzugsweise wenigstens 248 °C, bevorzugter wenigstens 250 °C, aufweist, wie bestimmt bei dem 2. Heizlauf in einem Differentialscanning-Kalorimeter (DSC) gemäß ASTM D3418 unter Verwendung von Heiz- und Kühlraten von 20 °C/min.

**8.** Pulverförmiges Material (M) gemäß einem der Ansprüche 1 bis 7, wobei das Fließmittel (F) ein anorganisches Pigment ausgewählt aus der Gruppe bestehend aus Siliciumdioxiden, Aluminiumoxiden und Titanoxid ist.

**9.** Pulverförmiges Material (M) gemäß einem der Ansprüche 1 bis 8, wobei das Fließmittel (F) pyrogenes Siliciumdioxid ist.

**10.** Pulverförmiges Material (M) gemäß einem der Ansprüche 1 bis 9, wobei das Material (M) einen $d_{50}$-Wert in dem Bereich zwischen 15 und 80 µm, wie gemessen durch Laserstreuung in Isopropanol, aufweist.

**11.** Pulverförmiges Material (M) gemäß einem der Ansprüche 1 bis 10, wobei das Material (M) einen $d_{90}$-Wert von kleiner als 150 µm, wie gemessen durch Laserstreuung in Isopropanol, aufweist.

**12.** Pulverförmiges Material (M) gemäß einem der Ansprüche 1 bis 11, wobei das Material (M) einen $d_{10}$-Wert von größer als 0,1 µm, wie gemessen durch Laserstreuung in Isopropanol, aufweist.

**13.** Pulverförmiges Material (M) gemäß einem der Ansprüche 1 bis 12, wobei das Material (M) einen $d_{99}$-Wert von kleiner als 195 µm, wie gemessen durch Laserstreuung in Isopropanol, aufweist.

**14.** Pulverförmiges Material (M) gemäß einem der Ansprüche 1 bis 13, wobei das pulverförmige Material (M) eine BET-Oberfläche in dem Bereich von 4 bis 20 $m^2/g$, wie gemessen gemäß ISO 9277 unter Verwendung einer Einwirk/Evakuierungstemperatur von höchstens 25 °C aufweist.

**15.** Verfahren zur Herstellung eines dreidimensionalen (3D) Gegenstands, Teils oder Verbundmaterials, umfassend:

a) Abscheiden von aufeinanderfolgenden Lagen eines pulverförmigen Materials (M) gemäß einem der Ansprüche 1-14 und
b) Drucken von Lagen vor Abscheiden der nachfolgenden Lage.

**16.** Verfahren gemäß Anspruch 15, wobei Schritt b) selektives Sintern des Pulvers mithilfe einer elektromagnetischen Strahlung umfasst.

**17.** Dreidimensionaler/dreidimensionales (3D) Gegenstand, Teil oder Verbundmaterial, erhältlich durch additive Fertigung aus einem pulverförmigen Material (M) gemäß einem der Ansprüche 1-14, wobei die additive Fertigung vorzugswiese selektives Lasersintern (SLS), additive Fertigungstechnologie auf Verbundstoffbasis ("CBAM") oder Multi Jet Fusion (MJF) ist.

**18.** Verwendung des pulverförmigen Materials (M) gemäß einem der Ansprüche 1-14 zur Herstellung eines dreidimensionalen (3D) Gegenstands unter Verwendung von additiver Fertigung, vorzugsweise selektivem Lasersintern (SLS), additiver Fertigungstechnologie auf Verbundstoffbasis ("CBAM") oder Multi Jet Fusion (MJF).

**19.** Verwendung des Gegenstands, Teils oder Verbundmaterials gemäß Anspruch 17 bei Öl- und Gasanwendungen, Automobilanwendungen, Elektro- und Elektronikanwendungen oder der Luftfahrt sowie Verbrauchsgütern.

## Revendications

**1.** Matériau pulvérulent (M) pour fabrication additive, ayant une valeur de $d_{50}$ dans la plage entre 10 et 100 µm, telle que mesurée par diffusion laser dans l'isopropanol, comprenant :

- un composant polymérique (P) comprenant au moins un polymère de type poly(sulfure d'arylène) (PAS), comprenant des motifs répétitifs p, q et r selon la formule (I), (II) et (III) :

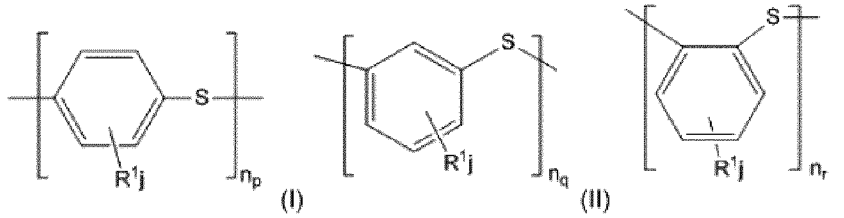

(I) (II) (III)

- $n_p$, $n_q$ et $n_r$ étant respectivement le % en moles de chaque motif répétitif p, q et r ;

- les motifs répétitifs p, q et r étant agencés en blocs, en alternance ou de manière aléatoire ;
- $$1\% \leq (n_q + n_r) / (n_p + n_q + n_r) \leq 12\ \%;$$
- $n_q$ étant $\geq 0$ % et $n_r$ étant $\geq 0$ % ;
- j étant zéro ou un entier variant entre 1 et 4 ;
- $R^1$ étant choisi dans le groupe constitué par des atomes d'halogène, des groupes alkyle en $C_{1-12}$, des groupes alkylaryle en $C_{7-24}$, des groupes aralkyle en $C_{7-24}$, des groupes arylène en $C_{6-24}$, des groupes alcoxy en $C_{1-12}$ et des groupes aryloxy en $C_{6-18}$,

- éventuellement un ou plusieurs agents d'écoulement (F),
- éventuellement un ou plusieurs additifs (A) choisis dans le groupe constitué par des lubrifiants, des stabilisants thermiques, des photostabilisants, des antioxydants, des pigments, des auxiliaires de traitement, des colorants, des charges, des nanocharges ou des absorbeurs électromagnétiques et des agents ignifugeants.

**2.** Matériau pulvérulent (M) selon la revendication 1, le PAS étant tel que $n_p + n_q + n_r \geq 50\%$.

**3.** Matériau pulvérulent (M) selon la revendication 1 ou 2, le PAS étant tel qu'il est constitué ou essentiellement constitué de motifs répétitifs p et de motifs répétitifs q et/ou r.

**4.** Matériau pulvérulent (M) selon l'une quelconque des revendications 1 à 3, le PAS étant tel que j est zéro dans la formule (I), (II) et (III).

**5.** Matériau pulvérulent (M) selon l'une quelconque des revendications 1 à 3, le PAS comprenant :

- des motifs répétitifs p et q mais pas de motifs répétitifs r et le pourcentage molaire de motifs répétitifs p et q dans le PAS étant tel que $1{,}2\ \% \leq n_q /(n_p + n_q) \leq 10{,}8$ % ; ou
- des motifs répétitifs p et r mais pas de motifs répétitifs q et le pourcentage molaire de motifs répétitifs p et r dans le PAS étant tel que $1{,}2\ \% \leq n_r / (n_p + n_q) \leq 10{,}8$ %.

**6.** Matériau pulvérulent (M) selon l'une quelconque des revendications 1 à 5, le PAS ayant une chaleur de fusion supérieure à 20 J/g, déterminée sur le 2e balayage thermique dans un calorimètre différentiel à balayage (DSC) selon la norme ASTM D3418, en utilisant des vitesses de chauffage et de refroidissement de 20 °C/min.

**7.** Matériau pulvérulent (M) selon l'une quelconque des revendications 1 à 6, le PAS étant tel qu'il possède un point de fusion d'au plus 280 °C, préférablement d'au plus 278 °C, plus préférablement d'au plus 275 °C et/ou d'au moins 245 °C, préférablement d'au moins 248 °C, plus préférablement d'au moins 250 °C, lorsqu'il est déterminé sur le 2e balayage thermique dans un calorimètre différentiel à balayage (DSC) selon la norme ASTM D3418, en utilisant des vitesses de chauffage et de refroidissement de 20 °C/min.

**8.** Matériau pulvérulent (M) selon l'une quelconque des revendications 1 à 7, l'agent d'écoulement (F) étant un pigment inorganique choisi dans le groupe constitué par des silices, des alumines et un oxyde de titane.

**9.** Matériau pulvérulent (M) selon l'une quelconque des revendications 1 à 8, l'agent d'écoulement (F) étant une silice fumée.

**10.** Matériau pulvérulent (M) selon l'une quelconque des revendications 1 à 9, le matériau (M) ayant une valeur $d_{50}$ dans la plage entre 15 et 80 pm, telle que mesurée par diffusion laser dans l'isopropanol.

**11.** Matériau pulvérulent (M) selon l'une quelconque des revendications 1 à 10, le matériau (M) ayant une valeur $d_{90}$ inférieure à 150 $\mu$m, telle que mesurée par diffusion laser dans l'isopropanol.

**12.** Matériau pulvérulent (M) selon l'une quelconque des revendications 1 à 11, le matériau (M) ayant une valeur $d_{10}$ supérieure à 0,1 $\mu$m, telle que mesurée par diffusion laser dans l'isopropanol.

**13.** Matériau pulvérulent (M) selon l'une quelconque des revendications 1 à 12, le matériau (M) ayant une valeur $d_{99}$

inférieure à 195 μm, telle que mesurée par diffusion laser dans l'isopropanol.

**14.** Matériau pulvérulent (M) selon l'une quelconque des revendications 1 à 13, le matériau pulvérulent (M) ayant une superficie BET dans la plage de 4 à 20 $m^2/g$, telle que mesurée selon la norme ISO 9277, en utilisant une température de trempage/évacuation d'au plus 25 °C.

**15.** Procédé pour la fabrication d'un article, d'une pièce ou d'un matériau composite tridimensionnel(le) (3D), comprenant :

a) un dépôt de couches successives d'un matériau pulvérulent (M) selon l'une quelconque des revendications 1 à 14, et
b) une impression de couches avant le dépôt de la couche subséquente.

**16.** Procédé selon la revendication 15, l'étape b) comprenant un frittage sélectif au moyen d'un rayonnement électromagnétique de la poudre.

**17.** Article, pièce ou matériau composite tridimensionnel(le) (3D) pouvant être obtenu(e) par fabrication additive à partir d'un matériau pulvérulent (M) selon l'une quelconque des revendications 1 à 14, ladite fabrication additive étant préférablement un frittage laser sélectif (SLS), une technologie de fabrication additive à base de composite (« CBAM ») ou fusion multi-jet (MJF).

**18.** Utilisation du matériau pulvérulent (M) selon l'une quelconque des revendications 1 à 14, pour la fabrication d'un objet tridimensionnel (3D) en utilisant une fabrication additive, préférablement un frittage laser sélectif (SLS), une technologie de fabrication additive à base de composite (« CBAM ») ou fusion multi-jet (MJF).

**19.** Utilisation de l'article, de la pièce ou du matériau composite selon la revendication 17 dans des applications d'huile et de gaz, des applications automobiles, des applications électriques et électroniques ou l'aérospatiale et des biens de consommation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20171226484 A, Toray
- WO 2020011991 A
- WO 2020011990 A, Solvay
- JP 2019165004 B, Toray
- JP S6310633 A, Idemitsu
- EP 3388471 A
- EP 3530701 A, Toray
- WO 2015095362 A1
- WO 2015177857 A1, Solvay
- WO 2016079243 A1, Solvay
- US 3919177 A
- US 4415729 A